# EUROPÄISCHE PATENTSCHRIFT

(11) **EP 1 084 602 B1**
(45) Veröffentlichungstag und Bekanntmachung des Hinweises auf die Patenterteilung: **17.03.2004**
(21) Anmeldenummer: 00108595.0
(22) Anmeldetag: 20.04.2000
(51) Int. Cl.: A01B 59/041

(54) **Seitenstrebe für einen Unterlenker eines Traktors**
Tractor lower arm side strut
Traverse latérale pour bras de levage inférieur de tracteur

(30) Priorität: 17.09.1999 DE 19944748
(43) Veröffentlichungstag der Anmeldung: 21.03.2001
(73) Patentinhaber: GKN Walterscheid GmbH, 53797 Lohmar (DE)
(72) Erfinder: Coenen, Herbert, Dipl.-Ing., 53639 Königswinter (DE)
(74) Vertreter: Harwardt, Günther, Dipl.-Ing.

(56) Entgegenhaltungen:
- DE-A- 19 537 555
- DE-A- 19 737 318
- DE-C- 19 744 328
- US-A- 5 823 271

## Beschreibung

Die Erfindung betrifft eine Seitenstrebe für einen Unterlenker eines Traktors.

Seitenstreben werden dafür benutzt, die Unterlenker eines Traktors, die seitlich schwenkbar sind, zumindest zeitweise gegen eine Auslenkung zu stabilisieren bzw. so auszubilden, daß beim Anheben eines Gerätes automatisch eine Mittenzentrierung des Gerätes und damit der Unterlenker im Verhältnis zur Traktorlängsachse eintritt. Des weiteren dienen die Seitenstreben dazu, die Unterlenker auf einem vorgegebenen Spreizmaß entsprechend der Kategorie des anzuhängenden Gerätes zu halten, um das Gerät automatisch, d.h. vom Fahrersitz aus kuppeln zu können.

Die DE 197 37 318 A1 betrifft eine Anordnung, bei der einem Unterlenker einer Traktoranbauvorrichtung ein einfachwirkender einstufiger Teleskopzylinder und dem anderen Unterlenker ein einfachwirkender einstufiger Hydraulikzylinder als Seitenstrebe zugeordnet ist. Die Kolbenstange des einstufigen Hydraulikzylinders weist eine Bohrung auf, in der eine Führungsstange frei beweglich einsitzt. Die Führungsstange oder die Kolbenstange eines der beiden Zylinder kann an dem freien Ende mit einem Gewinde versehen sein, auf das ein Anschlußmittel zur Verbindung mit dem Unterlenker mittels eines Innengewindes mehr oder weniger weit aufschraubbar ist. Eine Stufe des zweistufigen Teleskopzylinders dient dem Spielausgleich bzw. der Kategorie-Anpassung. Zwischen dem der Kolbenstange zugeordneten Anschlußmittel und dem Zylindergehäuse ist außerhalb derselben eine Zugfeder angeordnet, welche die Kolben und die Führungsstange zur Einnahme ihrer eingefahrenen Position beaufschlagt. Die Zugfeder ist also exzentrisch zur Längsachse der Seitenstrebe angeordnet und entsprechend ungeschützt, so daß eine Veränderung des Spreizmaßes zwischen den beiden Unterlenkern eintritt, wenn kein Gerät angehängt ist. Zum Kuppeln eines Gerätes muß das richtige Spreizmaß wieder eingestellt werden. Ferner kann die Wirkung der Feder durch den rauhen Einsatz beschädigt werden. Es besteht auch für den Traktorfahrer die Gefahr der Verletzung durch Einklemmen zwischen den Windungen der Feder.

Die DE-GM 19 749 38 beschreibt die Ausbildung und Zuordnung von Seitenstreben zu den Unterlenkern eines Traktors. Jede Seitenstrebe umfaßt ein Rohr mit ersten Anschlußmitteln und einen darin durch Anschläge begrenzt verstellbaren Zapfen, der mit weiteren Anschlußmitteln versehen ist.

Die Verbindung zu den Unterlenkern kann, wenn diese beispielsweise durch eine Ackerschiene miteinander verbunden sind, derart erfolgen, daß eine freie seitliche Beweglichkeit gegeben ist oder derart, daß diese Beweglichkeit aufgehoben ist. Zusätzlich kann ein Spielausgleich durch eine Gewindespindel erfolgen. Ein Mittenstelleffekt z. B. ab einer bestimmten Hubstellung der Unterlenker ist nicht möglich.

Die DE 197 44 328 C1 beschreibt eine Seitenstrebe, die an den Unterlenkern eines Traktors einsetzbar ist. Sie umfaßt einen einfachwirkenden Hydraulikzylinder, der einen Kolben und ein Zylindergehäuse aufweist. Die zum Kolben gehörende Kolbenstange ist endseitig aus dem Zylindergehäuse herausgeführt und trägt erste Anschlußmittel zur Verbindung mit entsprechenden Anschlußmitteln am Heck des Traktors.

An das Zylindergehäuse schließt sich axial ein Hohlzylinder an, in dem ein stangenförmiges Stellelement verstellbar einsitzt. Dieses ist durch zwei beabstandete Führungsringe in dem Hohlzylinder geführt und wird durch eine zwischen den Führungsringen angeordnete Druckfeder zu einer eingefahrenen Stellung beaufschlagt, in der sich das Stellelement mit einer Stirnfläche gegen den Boden des Zylindergehäuses abstützt. Der Kolben und das Stellelement sind gegenläufig ausfahrbar. In dem bei eingefahrenem Stellelement aus dem Hohlzylinder herausragenden Ende des Stellelementes ist eine Gewindebohrung angebracht, in welche eine Gewindestange eingreift, an der die zweiten Anschlußmittel zur Verbindung mit einem zugehörigen Unterlenker angebracht sind. Für die bei modernen Traktoren vorherrschenden Einbauverhältnisse ist die aus der Hintereinanderanordnung des Zylindergehäuses, des Hohlzylinders und der Stelleinrichtung für die Kategorieeinstellung mit der Gewindebohrung und der Gewindestange resultierende Basislänge axial zu groß, so daß der Pendelweg des Unterlenkers eingeschränkt wird.

Der Erfindung liegt die Aufgabe zugrunde, eine Seitenstrebe vorzuschlagen, die möglichst kurz baut und bei der die Stellung des Kolbens im Zylindergehäuse von der Feder unbeeinflußt ist.

Diese Aufgabe wird erfindungsgemäß durch eine Seitenstrebe gelöst, die einen einfachwirkenden Hydraulikzylinder, welcher ein Zylindergehäuse, einen Kolben, der aus einem Hohlzylinder und einem dessen eines Ende verschließenden Boden besteht, wobei das mit dem Boden versehene Ende des Kolbens in das Zylindergehäuse eintaucht und der Hohlzylinder des Kolbens aus dem Zylindergehäuse herausgeführt ist und der Kolben im Zylindergehäuse entlang einer Längsachse verstellbar ist und welcher erste Anschlußmittel aufweist, und Stellmittel mit einem stangenförmigen Stellelement, das koaxial und um die Längsachse drehbar in dem Hohlzylinder angeordnet und relativ zu diesem zwischen einer in den Hohlzylinder eingeschobenen und einer aus diesem ausgeschobenen Stellung verstellbar ist und eine auf der Längsachse zentriert angeordnete Gewindebohrung aufweist, die von dessen aus dem offenen Ende des Hohlzylinders herausragenden zweiten Stirnfläche ausgeht, mit Federmitteln, welche im Hohlzylinder um das Stellelement angeordnet sind, die nur zwischen dem Kolben und dem Stellelement wirksam sind und das Stellelement zur Einnahme der eingeschobenen Stellung, in der es mit einer ersten Stirnfläche in Kontakt zur Bodenfläche des Bodens des Kolbens ist, beaufschlagen und die eine Verstellung des Stellelementes in einer der Ausfahrrichtung des Kolbens aus dem Zylindergehäuse entsprechenden Richtung zulassen, mit Betätigungsmitteln zur Drehverstellung des Stellelementes und mit einer Gewindestange, die mit zweiten Anschlußmitteln verbunden ist und in der Gewindebohrung des Stellelementes verstellbar einsitzt, umfaßt.

Durch die ineinandergeschachtelte Bauweise werden kurze Baulängen zwischen den Anschlußmitteln erreicht. Hierdurch wird beim Einsatz bei den Unterlenkern eines Traktors eine große seitliche Bewegungsfreiheit der Unterlenker gewährleistet. Darüber hinaus wird durch die gleichgerichtete Bewegung von Kolben und Stellelement im Ausfuhrsinne eine nur kleine Knicklänge erzielt, was sich festigkeitsmäßig günstig auswirkt. Von Vorteil dabei ist auch, daß die Federmittel geschützt untergebracht sind. Dadurch, daß die Federmittel das Stellelement im eingefahrenen Zustand mit einer ersten Stirnfläche in Kontakt zur Bodenfläche des Bodens des Kolbens halten, ergibt sich eine sichere Abstützung. Das Gewinde dient zur Erzielung einer Kategorieverstellung bzw. zur Unterdrückung der Spiele bei gekuppeltem Gerät. Die Feder dient ausschließlich zur Verstellung des Stellelementes. Sie hat keinen Einfluß auf die Stellung des Kolbens im Zylinder.

Vorzugsweise wird das stangenförmige Stellelement durch zwei Führungsringe, nämlich einen ersten Führungsring und einen zweiten Führungsring, die auf der Außenfläche des Stellelementes angebracht sind, im Hohlzylinder geführt. Die kompakte Anordnung wird darüber hinaus noch dadurch unterstützt, daß der erste Führungsring an dem dem Zylindergehäuse entfernten Ende im Hohlzylinder in Ausfahrrichtung des Stellelementes und der zweite Führungsring an dem dem Boden des Kolbens zugewandten Ende des Stellelementes in einer der Einfahrrichtung des Stellelementes entsprechenden Richtung festgelegt ist und daß zwischen beiden sowie zwischen der Außenfläche des Stellelementes und der Innenfläche des Hohlzylinders die Federmittel in Form einer Druckfeder angeordnet sind. Das Stellelement ist in den beiden Führungsringen drehbar gehalten.

Durch Drehen des Stellelementes erfolgt eine Längenveränderung der Länge zwischen den Anschlußmitteln. Um das Drehen zu erleichtern, ist an dem aus dem Hohlzylinder vorstehenden Ende des Stellelementes ein Betätigungshebel als Betätigungsmittel angebracht. Dieser kann an Haltemitteln festlegbar sein, um eine unbeabsichtigte Verstellung auszuschließen.

Die ersten Anschlußmittel sind vorzugsweise mit dem Zylindergehäuse verbunden. Durch die Anordnung der Gewindebohrung in dem Stellelement derart, daß diese zumindest teilweise im eingefahrenen Zustand des Stellelementes auch innerhalb des Hohlzylinders und damit innerhalb des Kolbens liegt, wird eine besonders kompakte Bauweise erzielt. Es werden extrem kurze Längen verwirklicht, so daß auch eine besonders günstige Knicklänge erzielt wird.

Ein bevorzugtes Ausführungsbeispiel der Erfindung ist in der Zeichnung dargestellt.

Es zeigt
- Figur 1: eine Draufsicht auf eine schematische Darstellung der Unterlenker einer Dreipunktanbauvorrichtung eines Traktors und die Zuordnung von Seitenstreben zu diesem und
- Figur 2: eine Seitenstrebe im Längsschnitt.

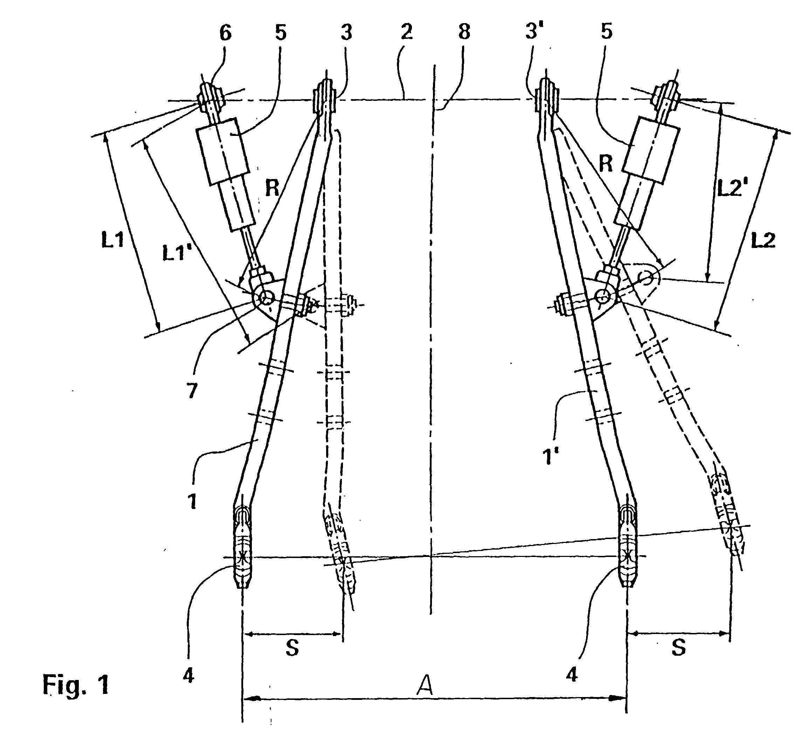

Figur 1 zeigt eine Draufsicht auf zwei Unterlenker 1, 1', welche um eine Schwenkachse 2 mittels entsprechender Anschlußmittel an den Befestigungsstellen 3, 3' am Heck eines Traktors schwenkbar angebracht sind. Die beiden Befestigungsstellen 3, 3' sind mit gleichem Abstand seitlich zur Traktorlängsachse 8 versetzt angeordnet. Die beiden Unterlenker 1, 1' können sowohl Seiten- als auch Hubbewegungen, d.h. Schwenkbewegungen um die Schwenkachse 2 nach oben bzw. unten, also aus der Blattebene heraus bzw. in die Blattebene hinein, und, wie auch ersichtlich, beispielsweise von der in ausgezogenen Linien dargestellten Position seitlich zu der gestrichelt dargestellten Position ausführen. Zur Stabilisierung, d.h. zur Verhinderung von seitlichen Bewegungen der beiden Unterlenker 1, 1' dienen Seitenstreben 5. An den beiden freien Enden der Unterlenker 1, 1' sind Kupplungshaken 4 angeordnet, welche der Aufnahme entsprechender Kuppelmittel an einem Gerät dienen, um das Gerät zu ziehen oder im Zusammenwirken mit einem nicht dargestellten Oberlenker, der üblicherweise auf der Traktorlängsachse 8 zentriert oberhalb der Schwenkachse 2 angeordnet ist, zu tragen. Die beiden Seitenstreben 5 sind mit einem Ende mittels erster Anschlußmittel 6 seitlich versetzt zu den Befestigungsstellen 3, 3' an entsprechenden und auf der Schwenkachse 2 zentrierten Befestigungsmitteln des Taktorhecks festgelegt. Mittels der am anderen Ende der Seitenstreben 5 vorgesehenen zweiten Anschlußmittel 7 sind diese jeweils mit einem Unterlenker 1, 1' verbunden. Die Anschlußmittel 6, 7 erlauben eine Schwenkbeweglichkeit. Es ist ferner aus Figur 1 ersichtlich, daß die Schwenkachsen der Anschlußmittel 7 mit einem Radius R zu den Befestigungsstellen 3, 3' angeordnet sind und somit eine Schwenkbewegung mit dem Radius R ausführen. Tritt bei angehängtem Gerät eine Seitenbewegung mit dem Maß S an beiden Unterlenkern 1, 1' auf, so daß auf eine Verlagerung der beiden Unterlenker 1, 1' von der in durchgezogenen Linien zu der in gestrichelten Linien dargestellten Position stattfindet, ergibt sich für die beiden Unterlenker 1, 1' ausgehend von gleichgroßen Abständen von L1 bzw. L2 zwischen den Schwenkachsen der Anlenkstellen 6, 7, eine Veränderung derart, daß sich für den Unterlenker 1 das Maß L1 auf L1' verlängert, während sich das Maß L2 auf L2' verkürzt. Dabei sind die Längenänderungen größenmäßig unterschiedlich. Bei einer Verschwenkung der Unterlenker 1 bzw. 1' um die Befestigungsstellen 3 bzw. 3' im rechtsschwenkenden Sinne würde entsprechend die Länge L1 verkürzt und die Länge L2 verlängert. Bei der Verkürzung muß darauf geachtet werden, daß beispielsweise der Unterlenker 1' in seiner gestrichelten Position nicht gegen die Hinterräder anschlagen kann. Ferner dienen die beiden Seitenstreben 5 dazu, das angehängte Gerät auf der Traktorlängsachse 8 zentriert zu halten, wenn dieses sich beispielsweise im angehobenen Transportzustand befindet. Gleiches gilt auch dann, wenn kein Gerät angehängt ist und die Unterlenker 1, 1' sich in Transportposition befinden. Die beiden Seitenstreben 5 sollen in diesem Zustand dafür sorgen, daß die Unterlenker 1, 1' so gehalten werden, daß sie sich seitlich nicht von dem eingestellten Spreizmaß A von der Traktorlängsachse nach außen in Richtung auf die Räder bewegen können. Das Spreizmaß A zwischen den Kupplungshaken 4 der beiden Unterlenker 1, 1' kann durch in die Seitenstreben 5 integrierte Teleskopverstellungen, die von Hand einstellbar sind, eingestellt werden, wenn Geräte mit einer von der jeweils eingestellten abweichenden Kategorie gekuppelt werden sollen.

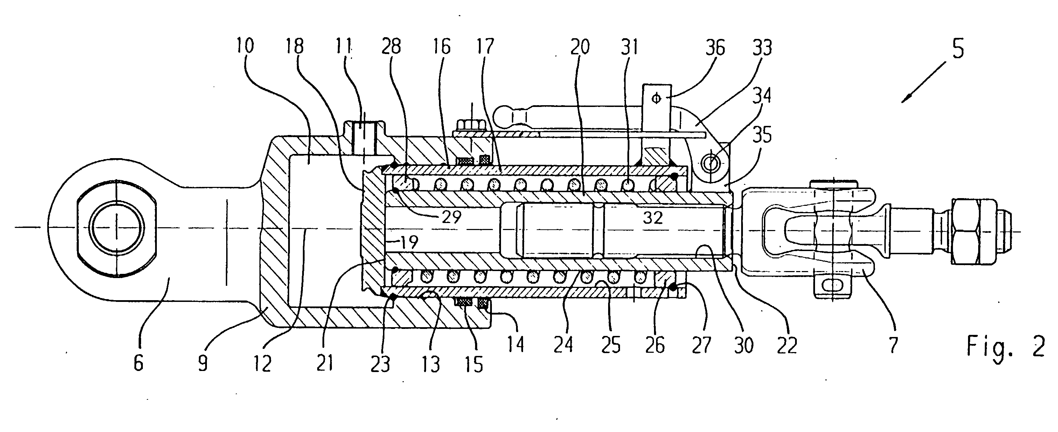

Aus Figur 2 ist eine Seitenstrebe 5 im vergrößerten Maßstab im Verhältnis zu Figur 1 im Längsschnitt zu erkennen. Die Seitenstrebe 5 umfaßt einen einfachwirkenden Hydraulikzylinder mit dem Zylindergehäuse 9 und dem Kolben 16. Das Zylindergehäuse 9 umfaßt einen Zylinderraum 10, der an einem Ende durch einen Boden verschlossen ist und an seinem anderen Ende eine Führungsbohrung 13 aufweist, die auf der Längsachse 12 zentriert ist. Des weiteren ist eine in den Zylinderraum 10 mündende Anschlußbohrung 11 vorgesehen. An diese ist eine Druckmittelleitung anschließbar, die beispielsweise mit dem Hubwerk des Traktors für die Unterlenker oder mit einer separaten Druckquelle unter Zwischenschaltung von Steuerelementen verbunden ist. An das Zylindergehäuse 9 sind des weiteren die ersten Anschlußmittel 6 angeschlossen, die beispielsweise in Form eines Kugelauges vorgesehen sind. An dem den ersten Anschlußmitteln 6 entfernten Ende der Führungsbohrung 13 sind ein Abstreifer 14 und eine Dichtung 15 hintereinandergeschaltet angeordnet. In der Führungsbohrung 13 ist ferner der Kolben 16 verschiebbar angeordnet. Der Kolben 16 besteht aus einem Hohlzylinder 17, der an einem Ende durch einen Boden 18 verschlossen ist. Die zum Innenraum des Hohlzylinders 17 weisende Bodenfläche des Bodens 18 ist mit 19 bezeichnet. Zum Boden 18 hin ist in der Außenfläche des Hohlzylinders 17 eine Nut angebracht, in der ein Anschlagring 23 einsitzt, der die Ausfahrbewegung des Kolbens 16 aus dem Zylindergehäuse 9 begrenzt. In Figur 2 ist der Kolben 16 in seiner maximal ausgefahrenen Stellung dargestellt. Der Kolben 16 stützt sich über den Anschlagring 23 gegen eine entsprechende Fläche im Übergang zwischen dem Zylinderraum 10 und der Führungsbohrung 13 ab. In dem Hohlzylinder 17 ist ein stangenförmiges, insbesondere rohrförmiges Stellelement 20 entlang der Längsachse 12 verstellbar aufgenommen. In Figur 2 ist das Stellelement 20 in seiner eingefahrenen Position zum Kolben 16 bzw. Hohlzylinder 17 dargestellt. Dabei liegt das Stellelement 20 mit seiner ersten Stirnfläche 21 gegen die Bodenfläche 19 an. Das Stellelement 20 ist im Verhältnis zu dem Hohlzylinder 17 mittels zweier Führungsringe 26, 28 geführt, die auf seiner Außenfläche 24 sitzen. Der erste Führungsring 26 ist nahe zu dem dem Boden 18 entfernten Ende des Hohlzylinders 17 angeordnet und an der Innenfläche 25 des Hohlzylinders 17 geführt, sowie gegen einen im Hohlzylinder 17 festgesetzten Sicherungsring 27 in Anlage, so daß er nicht aus dem Hohlzylinder 17 herausbewegt werden kann. Der zweite Führungsring 28 ist nahe zum Boden 18 angeordnet und auf der Außenfläche 24 des Stellelementes 20 in Richtung zum Boden 18 durch einen Sicherungsring 29 festgelegt. Der Führungsring 28 ist an der Innenfläche 25 des Hohlzylinders 17 geführt. Zwischen den beiden Führungsringen 26, 28 ist eine Druckfeder 31 angeordnet. Diese beaufschlagt das Stellelement 20 in Richtung zum Boden 18, so daß dieses mit der ersten Stirnfläche 21 in Anlage zur Bodenfläche 19 gehalten wird. Die Druckfeder 31 ist koaxial um das Stellelement 20 und in dem Hohlzylinder 17 angeordnet. Das Stellelement 20 weist eine durchgehende und auf der Längsachse 12 zentrierte Bohrung auf, wobei der von der zweiten Stirnfläche 22 des Stellelementes 20 ausgehende Teil als Gewindebohrung 30 gestaltet ist, in der eine Gewindestange 32 verstellbar einsitzt. Die Gewindebohrung 30 ist im eingefahrenen Zustand des Stellelementes 20 im Verhältnis zum Hohlzylinder 17 mit einem Teil ihrer Länge im Hohlzylinder 17 angeordnet. Ein geringer Teil des Stellelementes 20 ragt im eingefahrenen Zustand über das dem Boden 18 abgewandte Ende des Hohlzylinders 17 axial hinaus. An diesem Ende ist ein Halter 35 angebracht, an dem ein Betätigungshebel 33 um die Schwenkachse 34 schwenkbar befestigt ist. Im inaktiven Zustand, das ist der in Figur 2 gezeigte Zustand, befindet sich der Betätigungshebel 33 zwischen zwei Gabelarmen eines Sicherungselementes 36, so daß er das Stellelement 20 im Verhältnis zum Kolben 16 undrehbar hält und ein Drehen des Stellelementes 20 um die Längsachse 12 nicht möglich ist. Die Gewindestange 32 trägt darüber hinaus die zweiten Anschlußmittel 7. Diese dienen zur Befestigung an einem Unterlenker. Durch die ineinandergeschachtelte Bauweise wird eine extrem kurze Einbaulänge erzielt.

### Bezugszeichenliste

- 1, 1': Unterlenker
- 2: Schwenkachse
- 3, 3': Befestigungsstelle
- 4: Kupplungshaken
- 5: Seitenstrebe
- 6: erste Anschlußmittel
- 7: zweite Anschlußmittel
- 8: Traktorlängsachse
- 9: Zylindergehäuse
- 10: Zylinderraum
- 11: Anschlußbohrung
- 12: Längsachse
- 13: Führungsbohrung
- 14: Abstreifer
- 15: Dichtung
- 16: Kolben
- 17: Hohlzylinder
- 18: Boden
- 19: Bodenfläche
- 20: Stellelement
- 21: erste Stirnfläche
- 22: zweite Stirnfläche
- 23: Anschlagring
- 24: Außenfläche des Stellelementes
- 25: Innenfläche
- 26: erster Führungsring
- 27: Sicherungsring
- 28: zweiter Führungsring
- 29: Sicherungsring
- 30: Gewindebohrung
- 31: Federmittel/Druckfeder
- 32: Gewindestange
- 33: Betätigungshebel
- 34: Schwenkachse
- 35: Halter
- 36: Sicherungselement

- A: Spreizmaß
- L1, L2, L1', L2': Länge
- R: Radius
- S: Seitenbewegung

## Patentansprüche

1. Seitenstrebe (5) für einen Unterlenker (1, 1') eines Traktors, umfassend
- einen einfachwirkenden Hydraulikzylinder,
welcher ein Zylindergehäuse (9), einen Kolben (16), der aus einem Hohlzylinder (17) und einem dessen eines Ende verschließenden Boden (18) besteht, wobei das mit dem Boden (18) versehene Ende des Kolbens (16) in das Zylindergehäuse (9) eintaucht und der Hohlzylinder (17) des Kolbens (16) aus dem Zylindergehäuse (9) herausgeführt ist und der Kolben (16) im Zylindergehäuse (9) entlang einer Längsachse (12) verstellbar ist und welcher erste Anschlußmittel (6) aufweist, und
- Stellmittel
mit einem stangenförmigen Stellelement (20), das koaxial und um die Längsachse (12) drehbar in dem Hohlzylinder (17) angeordnet und relativ zu diesem zwischen einer in den Hohlzylinder (17) eingeschobenen und einer aus diesem ausgeschobenen Stellung verstellbar ist und eine auf der Längsachse (12) zentriert angeordnete Gewindebohrung (30) aufweist, die von dessen aus dem offenen Ende des Hohlzylinders (17) herausragenden zweiten Stirnfläche (22) ausgeht,
mit Federmitteln (31), welche im Hohlzylinder (17) um das Stellelement (20) angeordnet sind, die nur zwischen dem Kolben (16) und dem Stellelement (20) wirksam sind und das Stellelement (20) zur Einnahme der eingeschobenen Stellung, in der es mit einer ersten Stirnfläche (21) in Kontakt zur Bodenfläche (19) des Bodens (18) des Kolbens (16) ist, beaufschlagen und die eine Verstellung des Stellelementes (20) in einer der Ausfahrrichtung des Kolbens (16) aus dem Zylindergehäuse (9) entsprechenden Richtung zulassen,
mit Betätigungsmitteln (33) zur Drehverstellung des Stellelementes (20)
und mit einer Gewindestange (32), die mit zweiten Anschlußmitteln (7) verbunden ist und in der Gewindebohrung (30) des Stellelementes (20) verstellbar einsitzt.

2. Seitenstrebe nach Anspruch 1,
**dadurch gekennzeichnet,**
**daß** das stangenförmige Stellelement (20) durch zwei Führungsringe (26, 28), nämlich einen ersten Führungsring (26) und einen zweiten Führungsring (28), die auf der Außenfläche (24) des Stellelementes (20) angeordnet sind, im Hohlzylinder (17) geführt ist.

3. Seitenstrebe nach Anspruch 2,
**dadurch gekennzeichnet,**
**daß** der erste Führungsring (26) an dem dem Zylindergehäuse (9) entfernten Ende im Hohlzylinder (17) in Ausfahrrichtung des Stellelementes (20) und der zweite Führungsring (28) an dem dem Boden (18) des Kolbens (16) zugewandten Ende des Stellelementes (20) in einer der Einfahrrichtung des Stellelementes (20) entsprechenden Richtung festgelegt ist und daß die Federmittel in Form einer Druckfeder (31) vorgesehen sind und zwischen den beiden Führungsringen (26, 28) sowie zwischen der Außenfläche (24) des Stellelementes (20) und der Innenfläche (25) des Hohlzylinders (17) angeordnet sind.

4. Seitenstrebe nach Anspruch 2,
**dadurch gekennzeichnet,**
**daß** das Stellelement (20) in den Führungsringen (26, 28) um die Längsachse (12) drehbar angeordnet ist.

5. Seitenstrebe nach Anspruch 1,
**dadurch gekennzeichnet,**
**daß** die Gewindebohrung (30) des Stellelementes (20) im eingefahrenen Zustand des Stellelementes (20) zumindest teilweise im Hohlzylinder (17) liegt.

6. Seitenstrebe nach Anspruch 1,
**dadurch gekennzeichnet,**
**daß** die Betätigungsmittel einen an dem aus dem Hohlzylinder (17) vorstehenden Ende des Stellelementes (20) angebrachten Betätigungshebel (33) umfassen.

7. Seitenstrebe nach Anspruch 1,
**dadurch gekennzeichnet,**
**daß** die ersten Anschlußmittel (6) mit dem Zylindergehäuse (9) verbunden sind.

## Claims

1. Side strut (5) for a lower steering arm (1, 1') of a tractor, comprising
- a single-action hydraulic cylinder,
having a cylinder housing (9), a piston (16), consisting of a hollow cylinder (17) and a base (18) closing one end of it, wherein the end of the piston (16) provided with the base (18) enters the cylinder housing (9) and the hollow cylinder (17) of the piston (16) is extended from the cylinder housing (9) and the piston (16) is movable in the cylinder housing (9) along a longitudinal axis (12) and which single-action hydraulic cylinder has first attachment means (6), and
- setting means including
a rod-shaped setting element (20), arranged coaxially and rotationally around the longitudinal axis (12) in the hollow cylinder (17) and is adjustable relative thereto between a position, moved-into the hollow cylinder (17), and a position, extended from the same, and having a threaded bore (30), centred on the longitudinal axis (12), which extends from its second end face (22) projecting from the open end of the hollow cylinder (17),
spring means (31), arranged in the hollow cylinder (17) around the setting element (20) and being effective only between the piston (16) and the setting element (20) and act upon the setting element (20) to take up the moved-in position, in which it is with a first end face (21) in contact with the base face (19) of the base (18) of the piston (16) and which enable the setting element (20) to be adjusted in a direction corresponding to the moving-out direction of the piston (16) from the cylinder housing (9),
actuation means (33) for rotationally displacing the setting element (20) and
a threaded rod (32), connected to second attachment means (7) and displaceably received in the threaded bore (30) of the setting element (20).

2. Side strut according to claim 1,
**characterised in that**
the rod-shaped setting element (20) is guided in the hollow cylinder (17) by two guiding rings (26, 28), namely a first guiding ring (26) and a second guiding ring (28), arranged on the outer face (24) of the setting element (20).

3. Side strut according to claim 2,
**characterised in that**
the first guiding ring (26) is secured in the hollow cylinder (17) at the end, removed from the cylinder housing (9), in the moving-out direction of the setting element (20) and that the second guiding ring (28) is secured at the end of the setting element (20), facing the base (18) of the piston (16), in a direction, corresponding to the moving-in direction of the setting element (20), and
that the spring means are provided in form of a pressure spring (31) and are arranged between the two guiding rings (26, 28) as well as between the outer face (24) of the setting element (20) and the inner face (25) of the hollow cylinder (17).

4. Side strut according to claim 2,
**characterised in that**
the setting element (20) is rotationally arranged in the guiding rings (26, 28) around the longitudinal axis (12).

5. Side strut according to claim 1,
**characterised in that**
the threaded bore (30) of the setting element (20) comes to rest at least partially in the hollow cylinder (17) in the moved-in condition of the setting element (20).

6. Side strut according to claim 1,
**characterised in that**
the actuating means comprise an actuating lever (33) attached to the end of the setting element (20), projecting from the hollow cylinder (17).

7. Side strut according to claim 1,
**characterised in that**
the first attachment means (6) are connected to the cylinder housing (9).

## Revendications

1. Traverse latérale (5) pour un bras de suspension inférieur (1, 1') d'un tracteur, comportant
- un vérin hydraulique à simple effet qui comprend un boîtier de vérin (9), un piston (16) constitué par un cylindre creux (17) et par un fond (18) refermant son extrémité, l'extrémité du piston (16) pourvue du fond (18) plongeant dans le boîtier de vérin (9) et le cylindre creux (17) du piston (16) étant mené hors du boîtier de vérin (9) et le piston (16) étant déplaçable dans le boîtier de vérin (9) le long d'un axe longitudinal (12), vérin hydraulique qui comprend des premiers moyens de raccordement (6), et
- des moyens de positionnement
comprenant un élément de positionnement (20) en forme de barre qui est agencé coaxialement et avec faculté de rotation autour de l'axe longitudinal (12) dans le cylindre creux (17) et qui est déplaçable par rapport à ce dernier entre une position rentrée dans le cylindre creux (17) et une position sortie hors de celui-ci, et qui comprend un perçage taraudé (30) centré sur l'axe longitudinal (12) et partant de sa deuxième surface frontale (22) dépassant hors de l'extrémité ouverte du cylindre creux (17),
comprenant des moyens élastiques (31) qui sont agencés dans le cylindre creux (17) autour de l'élément de positionnement (20), qui agissent uniquement entre le piston (16) et l'élément de positionnement (20) et qui sollicitent l'élément de positionnement (20) pour occuper la position rentrée dans laquelle il est en contact par une première surface frontale (21) avec la surface (19) du fond (18) du piston (16), et qui permettent un déplacement de l'élément de positionnement (20) dans une direction qui correspond à la direction de sortie du piston (16) hors du boîtier de vérin (9),
comprenant des moyens d'actionnement (33) pour le déplacement en rotation de l'élément de positionnement (20),
et comprenant une barre filetée (32) qui est reliée à des deuxièmes moyens de raccordement (7) et qui est logée avec faculté de déplacement dans le perçage taraudé (30) de l'élément de positionnement (20).

2. Traverse latérale selon la revendication 1, **caractérisée en ce que** l'élément de positionnement (20) en forme de barre est guidé dans le cylindre creux (17) par deux bagues de guidage (26, 28) que sont une première bague de guidage (26) et une deuxième bague de guidage (28) agencées sur la surface extérieure (24) de l'élément de positionnement (20).

3. Traverse latérale selon la revendication 2, **caractérisée en ce que** la première bague de guidage (26) est immobilisée à l'extrémité éloignée du boîtier de vérin (9) dans le cylindre creux (17) en direction de sortie de l'élément de positionnement (20), et la deuxième bague de guidage (28) est immobilisée à l'extrémité de l'élément de positionnement (20) tournée vers le fond (18) du piston (16) dans une direction qui correspond à la direction d'entrée de l'élément de positionnement (20), et **en ce que** les moyens élastiques sont prévus sous la forme d'un ressort de compression (31) et agencés entre les deux bagues de guidage (26, 28) ainsi qu'entre la surface extérieure (24) de l'élément de positionnement (20) et la surface intérieure (25) du cylindre creux (17).

4. Traverse latérale selon la revendication 2, **caractérisée en ce que** l'élément de positionnement (20) est agencé dans les bagues de guidage (26, 28) avec faculté de rotation autour de l'axe longitudinal (12).

5. Traverse latérale selon la revendication 1, **caractérisée en ce que** dans l'état rentré de l'élément de positionnement (20), le perçage taraudé (30) de l'élément de positionnement (20) se trouve au moins partiellement dans le cylindre creux (17).

6. Traverse latérale selon la revendication 1, **caractérisée en ce que** les moyens d'actionnement comprennent un levier d'actionnement (33) monté à l'extrémité de l'élément de positionnement (20) faisant saillie hors du cylindre creux (17).

7. Traverse latérale selon la revendication 1, **caractérisée en ce que** les premiers moyens de raccordement (6) sont reliés au boîtier de vérin (9).
